# EUROPEAN PATENT SPECIFICATION

(11) **EP 2 610 589 B1**
(45) Date of publication and mention of the grant of the patent: **18.09.2019**
(21) Application number: 11195963.1
(22) Date of filing: 28.12.2011
(51) Int. Cl.: G01C 21/36

(54) **Method of displaying points of interest**
Verfahren zur Anzeige von Interessenpunkten
Procédé d'affichage des points d'intérêt

(43) Date of publication of application: 03.07.2013
(73) Proprietor: Harman Becker Automotive Systems GmbH, 76307 Karlsbad (DE)
(72) Inventor: Radner, Markus, 81373 Munich (DE); Strassenburg-Kleciak, Marek, 85748 Garching (DE)
(74) Representative: Bertsch, Florian Oliver

(56) References cited:
- EP-A1- 2 075 536
- US-A1- 2005 251 334
- US-A1- 2009 144 660

## Description

### Field of the Invention

The invention relates to a method of displaying points of interest in a perspective view of a geographical area and to a navigation device implementing such method.

### Background

Navigation systems are used for guiding the driver of a vehicle to a destination. Other applications include the use by pedestrians, bikers, boat drivers and pilots for finding a destination or for obtaining information on the area they are travelling in. For this purpose, modern navigation devices are equipped with a display on which the actual position of the navigation device and the geographical region in proximity to this position can be shown. As an example, a map section, a satellite image or a topology image of the region may be shown on the display of the navigation device.

More advanced systems feature perspective views of the geographical region, which may in a simple case include a view from an elevated angle onto a map section, and which in a more complex case can comprise rendered objects, such as buildings, mountains, or the like. The view point of the perspective view can coincide (at least in horizontal direction) with the position of the navigation device or may be located in proximity thereto.

To provide the user of a navigation device with information on interesting places, such as monuments or buildings, or information on facilities such as restaurants and gas stations, it is know to provide graphical indications in the displayed geographical region which are generally termed points of interest (POIs). The POIs can be displayed as pictograms, which indicate their meaning through their pictorial resemblance to the facility or site for which they stand.

In a perspective view, the pictograms for all POIs are generally displayed at the same size irrespective of their position in the perspective view, since making the pictograms smaller would render them unrecognizable. Thus, the perspective impression of the perspective view is degraded. Further, it becomes confusing and unclear to a user of the navigation device in which distance the POIs are actually located.

The document EP 2 075 536 A1 discloses a method for a navigation device, wherein a map image is displayed on a display in 3D, wherein POIs existing in a first searching region within a first searching distance from a current position of the vehicle are searched in an area in vicinity of the vehicle position by setting all types of points as search targets, wherein POIs existing in a second searching region within a second searching distance from a second searching point are searched in an area distant from the vehicle position by setting only specific types of points as search targets, wherein icon symbols indicating types and positions of the points are displayed on the map image while being overlapped therewith based on the searched POIs, and wherein the sizes of the icon symbols change depending on the position of the POIs.

The document US 2009/144660 A1 discloses a method for a navigation system, wherein an icon database regarding generic icons and brand icons is created, wherein the icon database includes information for distinguishing a local brand icon from a national brand icon, wherein the icons are displayed over a map image on a screen of a navigation system, wherein it is detected whether there is a local brand icon displayed on the screen, wherein a business category of a business entity is indicated using the local brand icon when a local brand icon is detected on the screen, and wherein a color is applied to the local brand icon, which is identical to that of a generic icon showing a business category identical to that of the business entity using the local brand icon.

It is desirable to provide POIs to the user of the navigation device such that the perspective impression is maintained. At the same time, the POIs should remain recognizable for the user.

### Summary

Accordingly, there is a need for improving the displaying of points of interest in a navigation device and for mitigating at least some of the drawbacks mentioned above.

This need is met by the features of the independent claims. The dependent claims describe preferred embodiments of the invention.

According to an embodiment of the invention, a method of displaying points of interest in a perspective view of a geographical area on a display of a navigation device is provided. The method comprises the steps of displaying a perspective view of the geographical area on the display of the navigation device and of displaying points of interest as graphical symbols in the perspective view. The size of each graphical symbol is dependent on the distance of the respective point of interest from a view point of the perspective view, such that graphical symbols for points of interest located further away from the view point are displayed smaller than graphical symbols for points of interest located closer to the view point. A perspective impression of the distance to the points of interest may thus be obtained. Each point of interest is associated with a point of interest-category. To different point of interest-categories, different display colors are assigned. In the method, at least graphical symbols having a size smaller than a predetermined minimum size are displayed in the display color of the point of interest-category associated with the respective point of interest.

By using different display colors for the different POI categories, the user of the navigation device may still be capable of identifying the POI category even if the graphical symbol for the POI is small. Thus, a perspective impression can be maintained while at the same time, the user still obtains an indication on the category of the POI. The predetermined minimum size may for example be a size at which the graphical symbol becomes difficult to be recognized on the display. It can be different for different types, sizes or resolutions of the display. Displaying the graphical symbol in the display color does not imply that it needs to be colored entirely in the display color. It is sufficient that a part of the graphical symbol has the display color so that the display color is recognizable. The view point may be the point from which a virtual observer sees the perspective view; it may be located close to the actual position of the navigation device (and possibly elevated by a certain distance), it may be user selected (e.g. when panning in the perspective view) or the like.

The graphical symbols are displayed in the display color of the point of interest category associated with the respective point of interest irrespective of their size. Accordingly, all POIs in the perspective view of the same category are displayed in the display color, which makes them easily identifiable.

At least the graphical symbols having a size larger than the predetermined minimum size may be pictograms indicative of the point of interest-type or the point of interest-category of the respective point of interest. The user may thus identify of which type or category a POI is by simply looking at the perspective view shown on the display. If the graphical symbols are further displayed in the display color irrespective of their size, then a user can further easily recognize which display color is associated with which POI category, since the pictograms indicating the POI type/category are shown in the display color for the respective POI category.

Displaying the graphical symbol in the display color may occur in different ways. Parts or all of the graphical symbol may be filled in the display color, or lines or borders may be in the display color. As an example, at least 30% or at least 50% or the filled pixels of the graphical symbol may be shown in the display color.

The graphical symbols having a size smaller than the predetermined minimum size are geometric shapes that are solidly filled in the display color assigned to the point of interest-category of the respective point of interest. As an example, the geometric shape may be a circle, a rectangle, a rectangle with rounded edges, a triangle or the like. By using a solidly filled geometric shape as the graphical symbol, the graphical symbol can still be easily recognized even at small sizes.

The points of interest may be associated with two or more point of interest-categories to each of which a different display color can be assigned. The graphical symbol displayed for such point of interest may comprises the two or more display colors of the two or more associated point of interest-categories. This way, further information on the POIs can be provided to the user even for POIs located further away from the view point and being displayed at smaller sizes. As an example, two categories may be assigned to a POI, and two halves of the graphical symbol may be displayed in the two display colors, e.g. each half may be filled with one display color. The top and bottom half or the left and right half of the graphical symbol may be displayed each in a different display color.

If three or more point of interest-categories are associated with a point of interest, the graphical symbol displayed for such point of interest may be displayed in a predetermined color irrespective of the display colors assigned to the three or more point of interest-categories. This may achieve a better readability on small displays with small symbols, e.g. for symbols of a size of only 6x6 pixel and below.

According to an embodiment, the method may further comprise the steps of determining for each point of interest to be displayed in the geographical area a distance measure indicative of a distance of the point of interest to the view point of the perspective view and, in dependence on the distance measure, of determining for each of the points of interest the size of the graphical symbol to be displayed for the respective point of interest, wherein the size of the graphical symbol depends on the distance measure such that for a larger distance measure, the size of the graphical symbol becomes smaller. The change in size for different values of the distance measure does not need to be continuous, but a range of values of the distance measure may correspond to a particular size of the graphical symbol. The size of the graphical symbol may be determined by querying a database with the distance measure and retrieving the graphical symbol of the associated size from the database, or by retrieving a value for the size from the database. The graphical symbol to be displayed for a particular POI may thus be obtained by retrieving the graphical symbol of the determined size from, e.g., a symbol database, or by retrieving a graphical symbol having a default size and scaling the graphical symbol to the desired size that was determined for the POI (i.e. the retrieved size value). A perspective impression of location of the POIs can thus be achieved in an efficient way.

Determining the size of the graphical symbol may comprise retrieving the graphical symbol having the desired size from a database which associates different values of the distance measure with different sizes of the graphical symbols and which further associates each point of interest-category with the respective display color of the graphical symbol. From such database, a color value may be retrieved for coloring the retrieved graphical symbol, or the graphical symbol may directly be retrieved in the display color associated with the respective point of interest category.

Determining the size of the graphical symbol may comprise, in another embodiment, the retrieving of a size value from a database which associates different values of the distance measure with different sizes values of the graphical symbols. The database may further associate each point of interest-category with the respective display color of the graphical symbol. The graphical symbol may be obtained by retrieving a graphical symbol of a default size from, e.g., a symbol database and scaling the graphical symbol in accordance with the size value. The graphical symbol may be retrieve in the display color or may be colored in accordance with the display color.

Larger values of the distance measure may be associated with smaller sizes of the graphical symbol in the database. From such database, the color and size of a graphical symbol to be displayed for a POI can thus be obtained. As an example a bitmap or vector image of the correct color and/or correct size may be directly obtained or a link/pointer to such image may be obtained, or values for color and/or size may be obtained and used to scaling and/or coloring a default bitmap or vector image. The database may be a separate symbol database, or it may part of a POI database or a map database storing the data for generating the perspective view of the geographical area.

The method may further comprise the retrieving of the POI and the associated POI category from a database, e.g. a POI database. The POI database may be a separate database, or it may be integrated with the above mentioned symbol database and/or map database.

The distance measure may for example be a distance of the point of interest to the view point, a distance of the point of interest to a projection of the view point onto the geographical area, a distance from a current position determined by the navigation device or selected by a user to the point of interest, or a distance from a current position to the point of interest along one or more road segments. Besides providing a perspective impression, the latter may further provide information to the user about the driving distance to the POI. The distance measure may disregard any elevation in vertical direction of the view point, i.e. the height position of the view point above the surface of the geographical area. The distance measure may be a straight line distance, i.e. disregarding obstacles like mountains or buildings in its path.

For points of interest for which the distance measure is smaller than a predetermined value, the graphical symbols displayed for the points of interest are pictograms indicative of a point of interest-type or the point of interest-category of the respective point of interest. The pictograms are displayed in the display color assigned to the point of interest-category associated with the respective point of interest. As an example, the pictograms may comprise lines and/or filled areas which are displayed in the display color. All colored pixels of the pictogram may be in the display color. For points of interest for which the distance measure is larger than the predetermined value, the graphical symbols displayed for such points of interest are geometric shapes solidly filled with the display color assigned to the point of interest-category associated with the respective point of interest. Again, all colored pixels of the geometric shape may be in the display color.

The pictograms and/or the geometric shapes may comprise a frame of a different color, e.g. a black frame.

Such configuration of the displaying of the POIs may achive a double indication of the POI category for closer POIs (by color and by pictogram), and a single indication and good visibility of POIs that are further away (by color and solid shapes) and further, a distance encoding by the size of the graphical symbols for the POIs. Recognition and selection of a particular POI is thus facilitated.

A further embodiment provides a navigation device comprising a display for displaying a perspective view of a geographical area, an interface to a (first) database which stores geographical data and points of interest for the geographical data and a processing unit. The processing unit is configured to perform the steps of displaying a perspective view of a geographical area on the display, and displaying points of interest as graphical symbols in the perspective view. The size of each graphical symbol is dependent on the distance of the respective point of interest from a view point of the perspective view, such that graphical symbols for points of interest located further away from the view point are displayed smaller than graphical symbols for points of interest located closer to the view point, so that a perspective impression of the distance to the points of interest is obtained. Each point of interest is associated with a point of interest-category, wherein to different point of interest-categories, different display colors are assigned. At least graphical symbols having a size smaller than a predetermined minimum size are displayed in the display color of the point of interest-category associated with the respective point of interest. By the navigation device, similar advantages as those outlined further above with respect to the inventive method may be achieved.

In an embodiment, the navigation device may comprise a (second) database which associates each point of interest with the respective point of interest-category and each point of interest category with the assigned display color. This (second) database may be a separate database, e.g. a symbol database, or it may be part of the (first) database storing the geographical data and points of interest (which first database may e.g. comprise a map database and a POI database, or a combined map/POI database).

The (second) database which associates the point of interest category with the assigned display color may further associate a distance measure indicative of a distance between a view point of the perspective view and a point of interest with different sizes of the graphical symbol of the point of interest, such that larger values of the distance measure are associated with smaller sizes of the graphical symbol. The value or a value range of the distance measure may for example be associated with a size value, a pointer/link to a graphical symbol of a particular size or directly with a graphical symbol of a particular size.

The navigation device may be configured to perform any of the above mentioned methods. In particular, the processing unit may be configured to perform any of the methods described above.

Furthermore, a computer program product is provided that can be loaded into the internal memory of a computing device, the product comprising software code portions for performing any of the above mentioned methods when the product is executed. The computer program product may be provided on a data carrier.

Further, an electronically readable data carrier is provided with stored electronically readable control information configured such that when using the data carrier in a computing device, the control information performs any of the above mentioned methods.

The features of the embodiments described above and further below may be combined with each other unless noted to the contrary.

### Brief Description of the Drawings

The foregoing and other features and advantages of the invention will become further apparent from the following detailed description read in conjunction with the accompanying drawings. In the drawings like reference numerals refer to like elements.
Fig. 1 is a schematic block diagram illustrating a navigation device according to an embodiment of the invention.
Fig. 2 is a flow diagram illustrating a method of displaying POIs according to an embodiment of the invention.
Fig. 3 is a flow diagram illustrating the obtaining of a graphical symbol for a POI in accordance with an embodiment of the invention, which may be used in the method of Fig. 2.
Fig. 4 is a flow diagram illustrating the obtaining of a graphical symbol for a POI in accordance with an embodiment of the invention, which may be used in the method of Fig. 2.
Fig. 5 illustrates an example of a database which associates a POI category with a display color and a distance measure with a size of a graphical symbol in accordance with an embodiment of the invention.
Fig. 6 is an example of a perspective view comprising POIs displayed in accordance with an embodiment of the invention, wherein the POIs are color coded and POIs that are further away are displayed using smaller graphical symbols.

### Detailed Description

It is to be understood that the following description of embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art.

The partitioning of embodiments in functional blocks or units shown in the drawings is not to be construed as indicating that these units necessarily are implemented as physically separate units, but functional blocks or units shown or described may be implemented as separate units, circuits, chips or circuit elements, but one or more functional blocks or units may as well be implemented in a common circuit, chip, circuit element or unit.

The determining and displaying of a perspective view in accordance with embodiments of the invention is not limited to a particular type of the displayed information. The perspective view of the geographical area may for example be an view of a map section at an elevated angle, or an inclined view of an satellite image of the geographical area, or a rendered image of the geographical area, such as a topology image, or any combination thereof. As an example, map data may be overlaid on a satellite image and a perspective view of this overlay may be determined, which may in addition comprise rendered objects, such as buildings, monuments, mountains or the like. The view point of the perspective view of the geographical area can correspond to the camera position from which the perspective view is seen, e.g. the camera position from which the perspective view is rendered. The view point may also be termed observer, viewers eye or simply viewer. An impression of perspective can be obtained by making objects that are located further away from the view point smaller, as this corresponds to the human perception of distance.

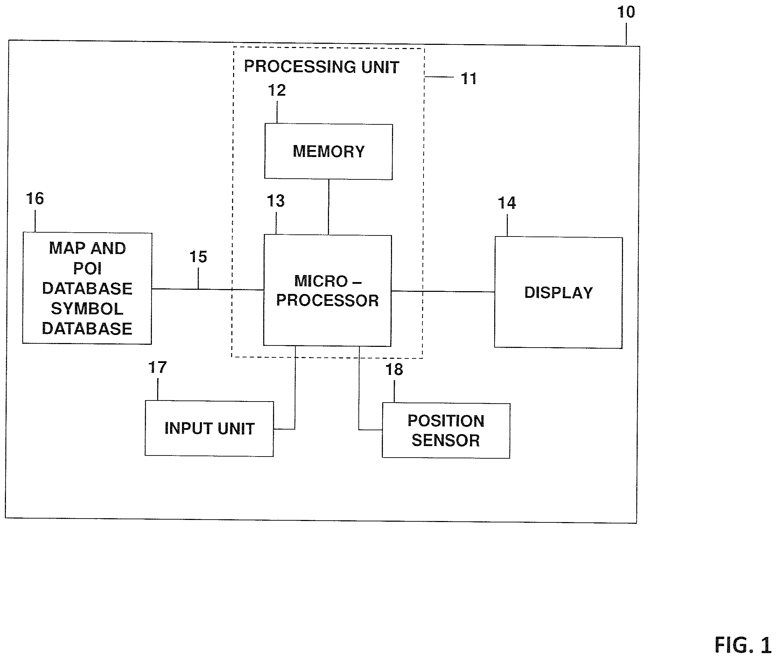

The schematic block diagram of Fig. 1 illustrates an navigation device 10 in accordance with an embodiment of the invention. The navigation device 10 comprises a processing unit 11 which includes a microprocessor 13 interfacing a memory 12. The navigation device 10 operates in accordance with control instructions stored in memory 12 and executed on microprocessor 13. Memory 12 may comprise all types of memory, volatile or non-volatile memory, such as random access memory, read only memory, flash memory, solid state memory, a hard disk and the like. The microprocessor 13 may comprise a single or multiple microprocessors, a special purpose microprocessor or the like.

Navigation device 10 further includes display 14, input unit 17 and position sensor 18 each interfacing the processing unit 11. Display 14 can be an liquid crystal display, a OLED display or any other type of display suitable for a navigation device. Input unit 17 may comprise buttons or keys disposed on navigation device 10 or remote therefrom, it may further comprise a touch panel or touch screen, and it may thus be integrated in one component with display 14. Input unit 17 and display 14 provide a user interface (or human machine interface) by means of which information can be presented to a user of the navigation device 10 and the user can control functions of navigation device 10.

Processing unit 11 is configured to operate a navigation application, e.g. by corresponding software instruction which are stored in memory 12 and executed on microprocessor 13. The navigation application can obtain information on the current position of the navigation device 10 by means of the position sensor 18. The position sensor 18 can be a GPS (global positioning system) position sensor which receives and evaluates position signals from satellites. The navigation application can further enable the user to enter a destination to which the user wants to travel, and may then determine a route from the current position to the destination in accordance with known methods.

For this purpose, processing unit 11 comprises an interface 15 to a database 16. Database 16 comprises a map database which stores map data for geographical areas, including road segments and their positions. Map database 16 may comprise further information on geographical areas, such as satellite images of the geographical areas, topology information for the geographical areas, and so on. The database 16 can be part of the navigation device 10, as shown in Fig. 1. In other configurations, database 16 may comprise a part that is local and part of navigation device 10 and a further part that is remote and may accessed by means of a data connection by navigation device 10, e.g. by a network connection, a mobile phone (data) connection, a wireless network connection, or the like. Interface 15 may in such configuration be coupled to a transceiver, e.g. a wireless network transceiver or mobile phone transceiver, via which processing unit 11 can communicate with this part of database 16. In other configurations, database 16 may entirely be a remote database.

Processing unit 11 can access the map data in database 16 via interface 15 for determining a route along road segments. It is further configured to access the map data and/or the satellite images and/or the topology information for generating an image of a geographical area to be displayed to a user of the navigation device. The image may show a map section or a satellite image for the geographical area or the like, as mentioned above. The image may be a top view of the geographical area, but processing unit 11 is also configured to generate a perspective view of the geographical area.

For generating the perspective view, processing unit 11 may select a view point in accordance with a current position of the navigation device 10 (e.g. determined by the position sensor 18) or in accordance with user input. The view point may be selected slightly above and behind the current position (as seen in the viewing direction), so that the position of the navigation device (e.g. in a vehicle) still falls within the perspective view, or it may be selected at or above the current position, so that the perspective view corresponds to the view as seen from the navigation device. If the navigation device is positioned inside a vehicle, the viewing direction of the perspective view may be chosen in accordance with the driving direction of the vehicle. This applies also for other types of movement of the navigation device 10 (e.g. when installed on another type of vessel, when walking with the navigation device or the like).

It is also possible that the view point is selected by the user, in correspondence to the panning of a map in a top view.

The determination of the perspective view from map data, which may be flat, from images and/or from topology information can occur according to any method known in the art. The perspective view may be obtained by scaling/distortion of the data, or preferably by rendering an image of the data.

It should be clear that navigation device 10 may comprise further components that are not depicted in Fig. 10 for the sake of brevity. In particular, it may comprise any components common to navigation devices known in the art.

Navigation device 10 may be any type of navigation device, portable or mounted. It may be a personal navigation device (PND), a vehicle or vessel mounted navigation device, a device implementing navigational functionality such as a smart phone, a laptop, a personal digital assistant (PDA), or the like.

In the embodiment of Fig. 1, processing unit 11 is further configured to display points of interest (POIs) in a perspective view of a geographical area on display 14. The POIs can be stored in the map database of database 16, or database 16 may comprise a separate POI database. POI data stored therein may for example associate geographical coordinates at which the POI is located with a certain type of POI, such as gas station, restaurant, or the like, and further with information on the POI (e.g POI category). For POIs located in the perspective view to be displayed, the processing unit is configured to retrieve a pictogram that represents the POI type and display the pictogram at the geographical location of the POI in the perspective view, so that the user is informed about the existence of corresponding facility at this location. The graphical symbol may be retrieved from the map or POI database, or database 16 may comprise a separate symbol database.

Processing unit 11 is configured to display the graphical symbol for a POI at a size that corresponds to the distance of the POI to the view point of the perspective view, so that POIs located further away from the view point are indicated as smaller graphical symbols in the perspective view. This creates an impression of perspective, and by means of the size of the graphical symbol, the user is enabled to judge the distance to the POI. The user thus obtains a natural and ergonomic view of the geographical area in which POIs are highlighted by the graphical symbols.

Furthermore, processing unit 11 is adapted to determine the category of the POIs to be displayed in the geographical area. The POI category may be retrieved from the database 16 storing the POI data (e.g. from the map database or the POI database). The POI category may also be user assigned and stored in the database 16. Processing unit 11 may also be provided with a set of rules for associating certain types of POIs with predetermined POI categories. Processing unit 11 is configured to display at least graphical symbols having a size smaller than a predetermined minimum size in a display color that is associated with the POI category of the respective POI.

In other configurations, it can display the graphical symbols irrespective of their size in the display color.

Processing unit 11 can be configured in different ways for displaying the graphical symbols for the POIs at a particular size and in a particular color. Database 16 may comprise a symbol database and, in dependence on the POI category and the distance of the POI to the view point, the processing unit can retrieve the graphical symbol of the required type, size and color for displaying. It is also possible that the graphical symbols are provided in a default color, and that the processing unit retrieves the color for the POI from database 16 and changes the color of the graphical symbol in accordance. It is also conceivable that the graphical symbols are provided in a default size, or are provided as vector images, and the processing unit retrieves the size of the graphical symbol from the database 16 in accordance with the distance measure and scales the graphical symbol in accordance with the retrieved size. It is also possible that processing unit 11 implements a set of rules for determining the size from the distance measure, e.g. by a conversion table or formula.

The graphical symbols (at least the more distant ones) are thus color coded in accordance with the POI category of the respective POI. Even for POIs located further away and thus displayed at smaller sizes in the perspective view, the user is thus enabled to determine the category of the POI. This is particularly helpful when the graphical symbols become so small that e.g. a pictogram indicating the POI type or category can no longer be recognized by the user. At least at and below such sizes, processing unit 11 implements the color coding. At or below such sizes at which graphical symbols in form of pictograms can no longer be recognized, the processing unit may substitute the pictogram by a geometrical shape, thereby further increasing the visibility of smaller graphical symbols in the perspective view.

The above mentioned configuration of the processing unit 11 may be achieved by corresponding control instructions stored in memory 12 and executed on microprocessor 13.

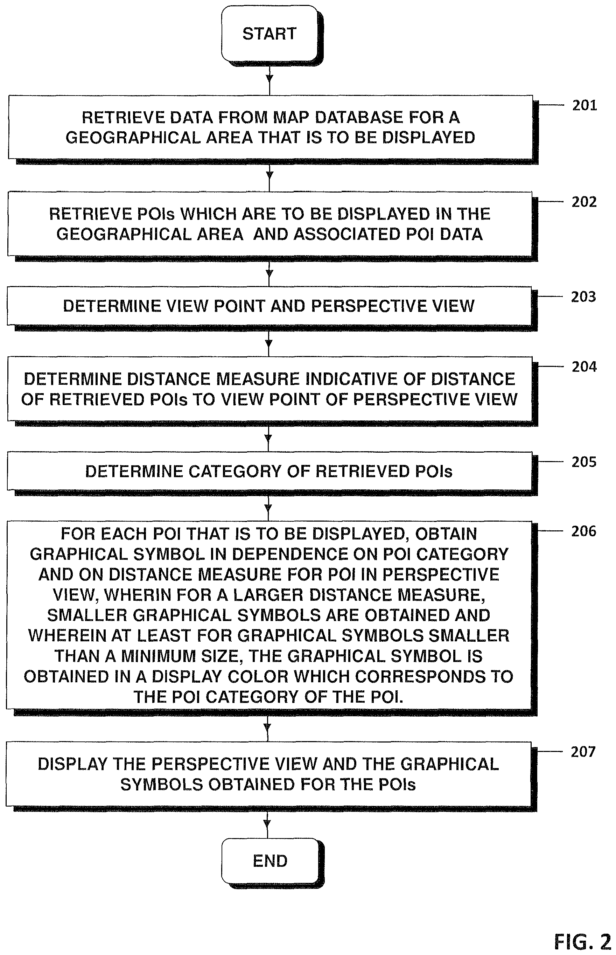

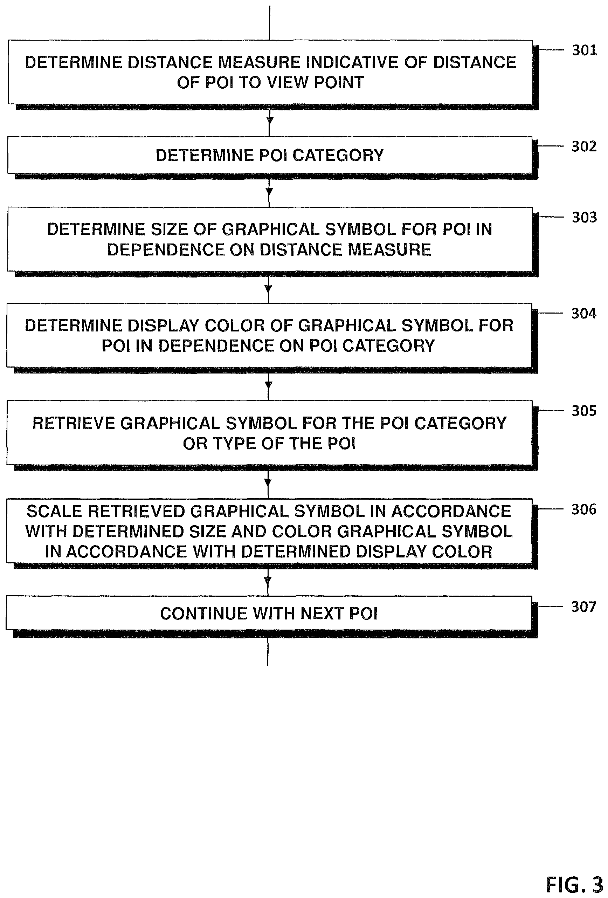

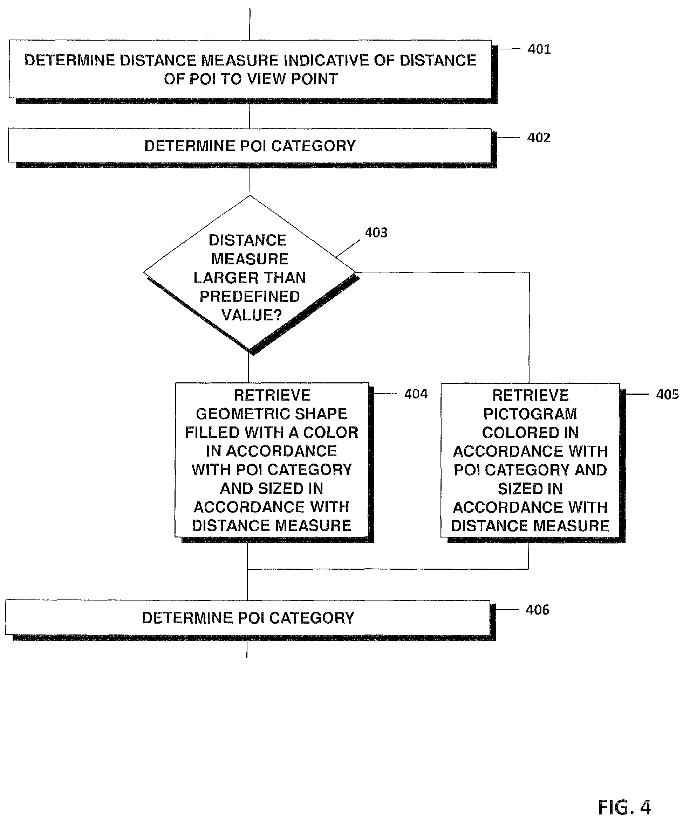

Fig. 2 is a flow diagram of a method according to an embodiment of the invention. In particular, processing unit 11 may be configured to carry out the steps of the method illustrated in Fig. 2. Consequently, the explanations given above equally apply to the method of Fig. 2, and the subsequent Figures 3 and 4 which show flow diagrams of possible implementations of the method.

In a first step 201, the data necessary for displaying the desired perspective view of the geographical area is retrieved from the map database, which is part of database 16. This may include the determination of the current position of the navigation device by means of position sensor 18, and the retrieving of the data for an area surrounding the current position. In the next step 202, the POIs are retrieved which are to be displayed in the perspective view. All POIs comprised within the geographical area may be retrieved, or only preselected POIs may be retrieved, e.g. selected according to the setting of the navigation device or according to user preferences/input. The POIs may are retrieved from database 16, e.g. from the map database or a separate POI database.

The view point and the perspective view are determined in step 203. The view point may correspond to the current position of the navigation device, and the viewing direction may further be determined. It may for example correspond to a direction of motion of the navigation device. Determining the perspective view may include the rendering of an image from the retrieved data using the determined view point and viewing direction.

In a next step 204, a distance measure indicative of distance of the retrieved POIs to the view point of perspective view is determined. The distance measure may but does not need to by the distance between the view point and the respective POI, in particular a straight line distance. The distance measure may for example be a straight line distance between the POI and the current position of the navigation device on the map, or to a projection of the viewpoint onto the map (i.e. the XY position on the map without taking the Z-Position or height of the view point above the map into account). Other possibilities of determining the distance measure are also conceivable, e.g. taking a distance from the current position to the POI along road segments.

The category of the retrieved POIs is determined in step 205. The category may be retrieved as part of POI data from database 16 in step 202. In may be determined in different ways, e.g. by means of user specifications associating particular types of POIs with a POI category. Such associations may be stored in a table as part of the database.

For each POI that is to be displayed, a graphical symbol is obtained in dependence on the POI category and on the distance measure for the POI in the perspective view (step 206), such that for a larger distance measure, smaller graphical symbols are obtained. At least for graphical symbols smaller than a minimum size, the graphical symbol is obtained in a display color which corresponds to the POI category of the POI. Possibilities for obtaining the graphical symbols in the desired color and size are described further below with respect to Figs. 3 and 4. As mentioned above, the graphical symbols may be obtained by retrieving the graphical symbol in the desired size and color from a symbol database (which may be part of database 16), or by scaling and/or coloring a default graphical symbol or by a combination of these possibilities.

In step 207, the perspective view and the graphical symbols obtained for the POIs are displayed on the display of the navigation device. The graphical symbols are displayed at or in proximity to the location of the respective POI in the geographical area. The user thus obtains an image on the display in which a perspective impression of the location of the POIs is achieved while at the same time, the category of the POIs is recognizable even for POIs indicated with relatively small graphical symbols.

Note that the above steps may also be carried out in a different order, the view point may for example be determined before retrieving the data from the map database so that the amount of data to be retrieved can be minimized.

Fig. 3 illustrates method steps of an embodiment of obtaining a graphical symbol for a POI which may be repeated for each POI to be displayed. The steps are a specific implementation of steps 204, 205 and 206 of the method of Fig.2.

In step 301 and 302, the distance measure and the POI category are determined for the POI under consideration, e.g. as outlined with respect to Fig. 2. In dependence on the distance measure, the size of the graphical symbol for the POI is determined (step 303). The size may be retrieved from a table (comprised, e.g., in the symbol or POI database) which associates ranges of the distance measure with predefined sizes of the graphical symbol. These may be different for different types of display 14 and may further change according to user settings.

In step 304, the display color of the graphical symbol for the POI is determined in dependence on POI category. Again, this may be performed by making use of a table which associates the different POI categories each with a different display color. The table may be part of the POI or the symbol database.

The graphical symbol for the POI category of the POI is retrieved in step 305, e.g. from a symbol database which forms part of database 16. The graphical symbol may be of a default color (e.g. in black) and size, it may be a bitmap or a vector graphic. The graphical symbol is for example a pictogram which represents the type or the category of the POI. Preferably, the pictogram represents the POI type, e.g. 'gas station', while the POI coloring represents the POI category, e.g. 'vehicle'.

When retrieving the graphical symbol, a differentiation may be made for different sizes (or correspondingly different values of the distance measure) determined for the POI. For sizes below a predetermined minimum size, a geometric shape may be retrieved for the graphical symbol while for larger sizes, the above mentioned pictogram may be retrieved. The geometric shape may be of any suitable type, such as a rectangle or square, possibly having rounded edges, a triangle, circle, diamond or the like. This can provide a better visibility of the smaller graphical symbols.

In step 306, the retrieved graphical symbol is scaled in accordance with the determined size and is colored in accordance with determined display color. After scaling and coloring, the graphical symbol is ready to be displayed in the perspective view. The steps are repeated for the remaining POIs to be displayed (step 307), and the method continues with step 207 of Fig. 2.

By the method of Fig. 3, only a small number of graphical symbols needs to be stored, since only one pictogram is required per POI type and only a single geometric shape needs to be provided. Storage space may thus be conserved.

Similarly, the method steps shown in Fig. 4 are a particular implementation of steps 204-206 of Fig. 2, the steps being performed for each POI to be displayed in the perspective view.

In step 401 and 402, the distance measure and the POI category are determined for the POI under consideration, e.g. as outlined with respect to Fig. 2. In decision step 403, it is determined whether the distance measure is larger than a predefined value. In the affirmative, a geometric shape filled with a color in accordance with POI category and sized in accordance with the distance measure is retrieved (step 404). If the decision is negative, a pictogram colored in accordance with POI category and sized in accordance with distance measure is retrieved, the pictogram being indicative of the POI type or category (step 405).

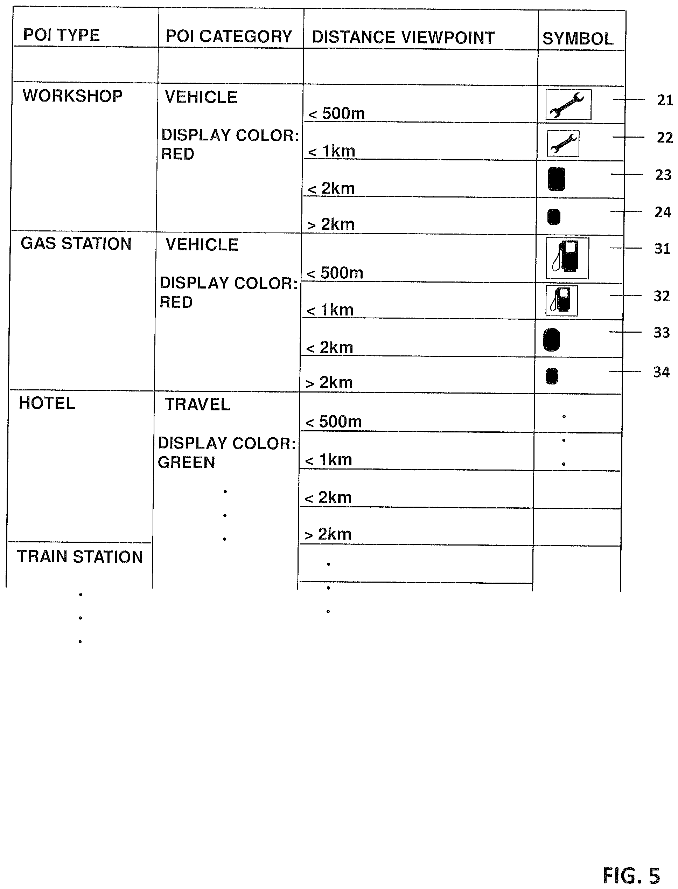

The pictogram and/or geometric shape is retrieved from a symbol database forming part of database 16. An example of a table of the symbol database is depicted in Fig. 5. The first column shows the POI type and the second column shows the associated POI category. Note that POI type and category can be retrieved as part of the POI data from the POI or map database. For each POI type, the third column comprises ranges of the distance measure. For each of these ranges, the fourth column comprises a graphical symbol of the appropriate size. For larger sizes (smaller value of the distance measure), the graphical symbol is a pictogram 21, 22, 31, 32 indicating the POI type (here for the first row: a wrench 21, 22 indicating the POI type 'workshop'). For smaller sizes, the graphical symbol 23, 24, 33, 34 is a rectangle with rounded edges. The symbols have a color that is associated with the POI category. In the black and white drawing of Fig. 5, the display color is indicated in the second column of the table under POI category. The table can now be queried by POI type and the distance measure and will return a graphical symbol having the desired size and color, the color being indicative of the POI category. The table may in the last column for example comprise a link or a pointer to the respective graphical symbol. The decision step 403 of Fig. 4 may thus be implemented by a simple query to the database illustrated in Fig. 5.

Note that the second column of the table is provided for illustration purposes only and may be omitted. Similarly, the first column may be omitted if the pictogram is only representative of the POI category and POI category may then be used in the database query.

The desired graphical symbol can thus be retrieved in a straight forward manner. Turning back to Fig. 4, the method continues in step 406, where the next POI is processed correspondingly. After graphical symbols were retrieved for each POI to be displayed in the perspective view, the method can continue with step 207 in Fig. 2.

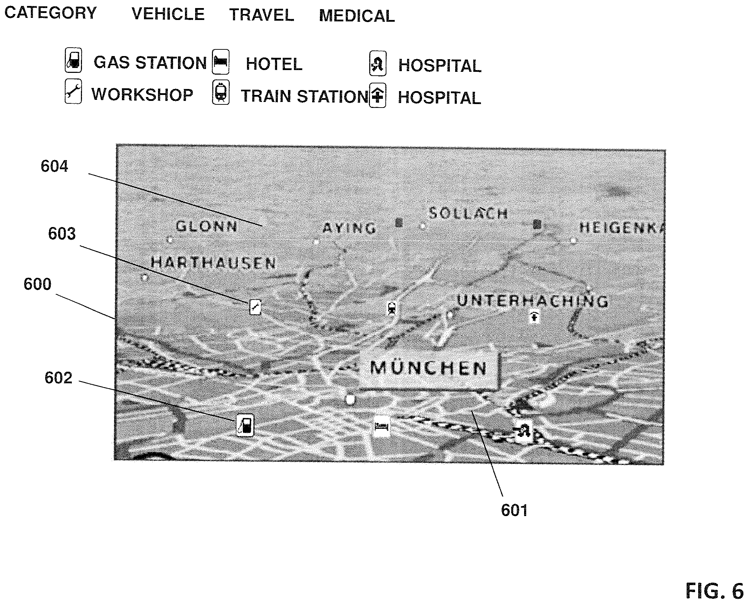

Fig. 6 illustrates a perspective view being displayed on the display 14 of the navigation device 10 as a result of the embodiments of the methods explained above. As can be seen, the perspective view 600 comprises geographical area 601 in form of a map section that is seen from a view point located slightly above the plane of the map. The perspective view 600 comprises POIs that are located at close to the view point (POI 602), at a medium distance to the view point (POI 603) and far from the view point (POI 603), which corresponds to increasing values of the distance measure.

The POIs of the type 'gas station' and 'workshop' are members of the category 'vehicle' and are shown in the display color 'red'. The POIs of type 'hotel' and 'train station' are member of the POI category 'travel' and are shown in the display color 'green'. The POIs of the type 'pharmacy' and 'hospital' are member of the category 'medical' and are shown in the display color 'blue'. The display colors are given here in writing, since they will not be visible in the black and white image of Fig. 6.

As can be seen, the size of the graphical symbols decreases with a larger distance to the view point. For the POIs located far from the view point, no pictograms but geometric shapes are shown, as explained above. Note that in Fig. 6, the left shape is colored blue, while the middle and the right shape are colored in red. Accordingly, even though a pictogram could no longer be recognized in the perspective view 600 of Fig. 6, the user immediately knows that the far away POIs relate to medical services and vehicle services, respectively. Still, the user will notice, due to the perspective impression obtained from the different sizes, that these POIs are located rather far away.

If the user is travelling in a vehicle and requires to take up fuel, he can direct his travel towards a far away POI of the category 'vehicle', or may zoom in on the particular POI to determine whether it is a gas station or workshop. Note that zooming in will reduce the distance to the view point und will thus result in the graphical symbol taking on the form of a pictogram.

The features of the embodiments described above can be combined with each other. As an example, graphical symbols of different sizes may be retrieved from a database in the same color and may be colored with the display color afterwards. Modifications of the above embodiments are certainly conceivable. As an example, not the entire pictogram or geometrical shape needs to be colored in the display color, but only parts of it. 'Displaying a graphical symbol in the display color' is not to be construed to mean that the whole graphical symbol needs to be in the display color, but it is sufficient if parts of the graphical symbol are in the display color so that the display color is recognizable. As an example, a frame and/or a filled area of the graphical symbol may have the display color. It is also possible to have more than one display color in the graphical symbol. For example if a POI is member to two POI categories, the two display colors associated with the two POI categories can be comprised in the graphical symbol. For more than two POI categories, a default display color is preferably chosen, since the display colors will otherwise become difficult to identify.

In summary, the present invention provides an improved displaying of POIs in a perspective view, so that the distance to the POI and the POI category can be easily recognized by a user when looking at the display of the navigation device.

While specific embodiments of the invention are disclosed herein, various changes and modifications can be made without departing from the scope of the invention, as defined by the appended claims.

## Claims

1. A method of displaying points of interest in a perspective view of a geographical area on a display of a navigation device, the method comprising the steps of
- displaying a perspective view (600) of the geographical area (601) on the display (14) of the navigation device (10);
- determining for each point of interest (602, 603, 604) to be displayed in the perspective view (600) a distance measure indicative of a distance of the point of interest (602, 603, 604) to the view point of the perspective view (600);
- in dependence on the distance measure, determining for each of the points of interest (602, 603, 604) the size of a graphical symbol (21, 22, 23, 24) to be displayed for the respective point of interest, wherein the size of the graphical symbol depends on the distance measure such that for a larger distance measure, the size of the graphical symbol becomes smaller; and
- displaying points of interest (602, 603, 604) as graphical symbols (21, 22, 23, 24) in the perspective view (600), wherein the size of each graphical symbol is dependent on the distance of the respective point of interest (602, 603, 604) from the view point of the perspective view (600), such that graphical symbols (23, 24) for points of interest located further away from the view point are displayed smaller than graphical symbols (21, 22) for points of interest located closer to the view point;
wherein each point of interest (602, 603, 604) is associated with a point of interest-category,
wherein to different point of interest-categories, different display colors are assigned, and wherein at least parts of the graphical symbols (23, 24) are displayed in the display color of the point of interest-category associated with the respective point of interest (602, 603, 604), **characterised in that** the method comprises the steps of:
for points of interest for which the distance measure is smaller than a predetermined value, the graphical symbols displayed for the points of interest are pictograms indicative of a point of interest-type or the point of interest-category of the respective point of interest, the pictograms being displayed in the display color assigned to the point of interest-category associated with the respective point of interest, and
for points of interest for which the distance measure is larger than the predetermined value, the graphical symbols displayed for the points of interest are geometric shapes solidly filled with the display color assigned to the point of interest-category associated with the respective point of interest.

2. The method according to any of the preceding claims, wherein the points of interest (602, 603, 604) can be associated with two or more point of interest-categories to each of which a different display color is assigned, wherein the graphical symbol displayed for such point of interest comprises the two or more display colors of the two or more associated point of interest-categories.

3. The method according to claim 1, wherein determining the size of the graphical symbol (21, 22, 23, 24) comprises retrieving the graphical symbol having the desired size from a database which associates different values of the distance measure with different sizes of the graphical symbols and which further associates each point of interest-category with the respective display color of the graphical symbol.

4. The method according to claim one of the preceding claims, wherein the distance measure is a distance of the point of interest to the view point, a distance of the point of interest to a projection of the view point onto the geographic area, a distance from a current position determined by the navigation device or selected by a user to the point of interest, or a distance from a current position to the point of interest along one or more road segments.

5. A navigation device, comprising
- a display (14) for displaying a perspective view (600) of a geographical area (601);
- an interface (15) to a database (16) which stores geographical data and points of interest for the geographical data; and
- a processing unit (11), the processing unit (11) being configured to perform the steps of
∘ displaying a perspective view (600) of a geographical area (601) on the display (14);
∘ determining for each point of interest (602, 603, 604) to be displayed in the perspective view (600) a distance measure indicative of a distance of the point of interest (602, 603, 604) to the view point of the perspective view (600);
∘ in dependence on the distance measure, determining for each of the points of interest (602, 603, 604) the size of a graphical symbol (21, 22, 23, 24) to be displayed for the respective point of interest, wherein the size of the graphical symbol depends on the distance measure such that for a larger distance measure, the size of the graphical symbol becomes smaller; and
∘ displaying points of interest (602, 603, 604) as graphical symbols (21, 22, 23, 24) in the perspective view (600), wherein the size of each graphical symbol is dependent on the distance of the respective point of interest from a view point of the perspective view, such that graphical symbols (23, 24) for points of interest located further away from the view point are displayed smaller than graphical symbols (21, 22) for points of interest located closer to the view point,
wherein to different point of interest-categories, different display colors are assigned, and wherein at least parts of the graphical symbols (23, 24) are displayed in the display color of the point of interest-category associated with the respective point of interest (602, 603, 604), **characterised in that** the processing unit is configured to perform the steps of:
for points of interest for which the distance measure is smalle a predetermined value, the graphical symbols displayed for the points of interest are pictograms indicative of a point of interest-type or the point of interest-category of the respective point of interest, the pictograms being displayed in the display color assigned to the point of interest-category associated with the respective point of interest, and
for points of interest for which the distance measure is larger than the predetermined value, the graphical symbols displayed for the points of interest are geometric shapes solidly filled with the display color assigned to the point of interest-category associated with the respective point of interest.

6. The navigation device according to claim 5, further comprising a database (16) which associates each point of interest with the respective point of interest-category and each point of interest category with the assigned display color.

7. The navigation device according to claim 6, wherein the database (16) further associates a distance measure indicative of a distance between a view point of the perspective view and a point of interest with different sizes of the graphical symbol of the point of interest, such that larger values of the distance measure are associated with smaller sizes of the graphical symbol.

8. The navigation device according to any of claims 5-7, wherein the processing unit is configured to perform the method according to one of claims 2-7.

9. A computer program product that can be loaded into the internal memory of a computing device, the product comprising software code portions for performing the method of one of claims 1-4, when the product is executed.

10. Electronically readable data carrier with stored electronically readable control information configured such that when using the data carrier in a computing device, the control information performs the method of one of claims 1-4.

## Patentansprüche

1. Verfahren zum Anzeigen von Interessenpunkten in einer perspektivischen Ansicht eines geografischen Bereichs auf einer Anzeige einer Navigationsvorrichtung, wobei das Verfahren die folgenden Schritte umfasst
- Anzeigen einer perspektivischen Ansicht (600) des geografischen Bereichs (601) auf der Anzeige (14) der Navigationsvorrichtung (10);
- Bestimmen eines Abstandsmaßes für jeden in der perspektivischen Ansicht (600) anzuzeigenden Interessenpunkt (602, 603, 604), der einen Abstand des Interessenpunkts (602, 603, 604) zu dem Standpunkt der perspektivischen Ansicht (600) anzeigt;
- in Abhängigkeit des Abstandsmaßes, Bestimmen der Größe eines für jeden der Interessenpunkte (602, 603, 604) anzuzeigenden grafischen Symbols (21, 22, 23, 24) für den jeweiligen Interessenpunkt, wobei die Größe des grafischen Symbols von dem Abstandsmaß abhängt, sodass bei einem größeren Abstandsmaß die Größe des grafischen Symbols kleiner wird; und
- Anzeigen von Interessenpunkten (602, 603, 604) als grafische Symbole (21, 22, 23, 24) in der perspektivischen Ansicht (600),
wobei die Größe jedes grafischen Symbols von dem Abstand des jeweiligen Interessenpunkts (602, 603, 604) vom Standpunkt der perspektivischen Ansicht (600) abhängig ist, sodass grafische Symbole (23, 24) für Interessenpunkte, die weiter weg vom Standpunkt liegen, kleiner dargestellt werden als grafische Symbole (21, 22) für Interessenpunkte, die näher an dem Standpunkt liegen;
wobei jeder Interessenpunkt (602, 603, 604) einer Interessenpunkt-Kategorie zugeordnet ist,
wobei verschiedenen Interessenpunkt-Kategorien unterschiedliche Anzeigefarben zugewiesen sind, und wobei mindestens Teile der grafischen Symbole (23, 24) in der Anzeigefarbe der dem jeweiligen Interessenpunkt (602, 603, 604) zugeordneten Interessenpunkt-Kategorie angezeigt werden, **dadurch gekennzeichnet, dass** das Verfahren ferner folgende Schritte umfasst:
für Interessenpunkte, bei denen das Abstandsmaß kleiner als ein vorgegebener Wert ist, sind die für die Interessenpunkte angezeigten grafischen Symbole Piktogramme, die eine Interessenpunktart oder die Interessenpunkt-Kategorie des jeweiligen Interessenpunkts anzeigen, wobei die Piktogramme in der Anzeigefarbe angezeigt werden, die der Interessenpunkt-Kategorie zugewiesen ist, die dem jeweiligen Interessenpunkt zugeordnet ist, und
für Interessenpunkte, bei denen das Abstandsmaß größer als der vorgegebene Wert ist, sind die für die Interessenpunkte angezeigten grafischen Symbole geometrische Formen, die vollständig mit der Anzeigefarbe gefüllt sind, die der Interessenpunkt-Kategorie zugewiesen ist, die dem jeweiligen Interessenpunkt zugeordnet ist.

2. Verfahren nach einem der vorstehenden Ansprüche, wobei die Interessenpunkte (602, 603, 604) zwei oder mehreren Interessenpunkt-Kategorien zugeordnet werden können, denen jeweils eine andere Anzeigefarbe zugewiesen ist, wobei das für diesen Interessenpunkt angezeigte grafische Symbol die zwei oder mehreren Anzeigefarben der zwei oder mehreren zugeordneten Interessenpunkt-Kategorien umfasst.

3. Verfahren nach Anspruch 1, wobei das Bestimmen der Größe des grafischen Symbols (21, 22, 23, 24) das Abrufen des grafischen Symbols, das eine gewünschte Größe aufweist, aus einer Datenbank umfasst, die verschiedene Werte des Abstandsmaßes unterschiedlichen Größen der grafischen Symbole zuordnet und die ferner jede Interessenpunkt-Kategorie der jeweiligen Anzeigefarbe des grafischen Symbols zuordnet.

4. Verfahren nach einem der vorstehenden Ansprüche, wobei das Abstandsmaß ein Abstand des Interessenpunkts zum Standpunkt, ein Abstand des Interessenpunkts zu einer Projektion des Standpunktes auf das geografische Gebiet, ein Abstand von einer aktuellen Position, die von der Navigationsvorrichtung bestimmt oder von einem Benutzer ausgewählt wurde, zum Interessenpunkt oder ein Abstand von einer aktuellen Position zum Interessenpunkt entlang eines oder mehrerer Straßenabschnitte ist.

5. Navigationsvorrichtung, umfassend
- eine Anzeige (14) zum Anzeigen einer perspektivischen Ansicht (600) eines geografischen Bereichs (601);
- eine Schnittstelle (15) zu einer Datenbank (16), die geografische Daten und Interessenpunkte für die geografischen Daten speichert; und
- eine Verarbeitungseinheit (11), wobei die Verarbeitungseinheit (11) konfiguriert ist, um die folgenden Schritte auszuführen
o Anzeigen einer perspektivischen Ansicht (600) eines geografischen Bereichs (601) auf der Anzeige (14);
o Bestimmen eines Abstandsmaßes für jeden in der perspektivischen Ansicht (600) anzuzeigenden Interessenpunkt (602, 603, 604), der einen Abstand des Interessenpunkts (602, 603, 604) zu dem Standpunkt der perspektivischen Ansicht (600) anzeigt;
o in Abhängigkeit vom Abstandsmaß, Bestimmen der Größe eines für jeden der Interessenpunkte (602, 603, 604) anzuzeigenden grafischen Symbols (21, 22, 23, 24) für den jeweiligen Interessenpunkt, wobei die Größe des grafischen Symbols von dem Abstandsmaß abhängt, sodass bei einem größeren Abstandsmaß die Größe des grafischen Symbols kleiner wird; und o Anzeigen von Interessenpunkten (602, 603, 604) als grafische Symbole (21, 22, 23, 24) in der perspektivischen Ansicht (600), wobei die Größe jedes grafischen Symbols von dem Abstand des jeweiligen Interessenpunkts von einem Standpunkt der perspektivischen Ansicht abhängig ist, sodass grafische Symbole (23, 24) für Interessenpunkte, die weiter weg vom Standpunkt liegen, kleiner dargestellt werden als grafische Symbole (21, 22) für Interessenpunkte, die näher an dem Standpunkt liegen,
wobei verschiedenen Interessenpunkt-Kategorien unterschiedliche Anzeigefarben zugewiesen sind, und wobei mindestens Teile der grafischen Symbole (23, 24) in der Anzeigefarbe der dem jeweiligen Interessenpunkt (602, 603, 604) zugeordneten Interessenpunkt-Kategorie angezeigt werden, **dadurch gekennzeichnet, dass** die Verarbeitungseinheit konfiguriert ist, um die folgenden Schritte auszuführen:
für Interessenpunkte, bei denen das Abstandsmaß kleiner als ein vorgegebener Wert ist, sind die für die Interessenpunkte angezeigten grafischen Symbole Piktogramme, die eine Interessenpunktart oder die Interessenpunkt-Kategorie des jeweiligen Interessenpunkts anzeigen, wobei die Piktogramme in der Anzeigefarbe angezeigt werden, die der Interessenpunkt-Kategorie zugewiesen ist, der mit dem jeweiligen Interessenpunkt zugeordnet ist, und
für Interessenpunkte, bei denen das Abstandsmaß größer als der vorgegebene Wert ist, sind die für die Interessenpunkte angezeigten grafischen Symbole geometrische Formen, die vollständig mit der Anzeigefarbe gefüllt sind, die der Interessenpunkt-Kategorie zugewiesen ist, die mit dem jeweiligen Interessenpunkt in Zusammenhang steht.

6. Navigationsvorrichtung nach Anspruch 5, ferner umfassend eine Datenbank (16), die jeden Interessenpunkt der jeweiligen Interessenpunkt-Kategorie und jede Interessenpunkt-Kategorie der zugewiesenen Anzeigefarbe zuordnet.

7. Navigationsvorrichtung nach Anspruch 6, wobei die Datenbank (16) ferner ein Abstandsmaß, das einen Abstand zwischen einem Standpunkt der perspektivischen Ansicht und einem Interessenpunkt anzeigt, unterschiedlichen Größen des grafischen Symbols des Interessenpunkts zuordnet, sodass größere Werte des Abstandsmaßes kleineren Größen des grafischen Symbols zugeordnet sind.

8. Navigationsvorrichtung nach einem der Ansprüche 5-7, wobei die Verarbeitungseinheit konfiguriert ist, um das Verfahren nach einem der Ansprüche 2-7 durchzuführen.

9. Computerprogrammprodukt, das in den internen Speicher einer Rechenvorrichtung geladen werden kann, wobei das Produkt Softwarecodebestandteile zum Durchführen des Verfahrens nach einem der Ansprüche 1-4 umfasst, wenn das Produkt ausgeführt wird.

10. Elektronisch lesbarer Datenträger mit gespeicherten elektronisch lesbaren Steuerinformationen, die so konfiguriert sind, dass bei Verwendung des Datenträgers in einer Rechenvorrichtung die Steuerinformationen das Verfahren nach einem der Ansprüche 1-4 durchführen.

## Revendications

1. Procédé d'affichage de points d'intérêt dans une vue en perspective d'une zone géographique sur un dispositif d'affichage d'un dispositif de navigation, le procédé comprenant les étapes de
- affichage d'une vue en perspective (600) de la zone géographique (601) sur le dispositif d'affichage (14) du dispositif de navigation (10) ;
- détermination pour chaque point d'intérêt (602, 603, 604) à afficher dans la vue en perspective (600) d'une mesure de distance représentant une distance du point d'intérêt (602, 603, 604) au point de vue de la vue en perspective (600) ;
- en fonction de la mesure de distance, détermination pour chacun des points d'intérêt (602, 603, 604) de la taille d'un symbole graphique (21, 22, 23, 24) à afficher pour le point d'intérêt respectif, dans lequel la taille du symbole graphique dépend de la mesure de distance de sorte que pour une mesure de distance supérieure, la taille du symbole graphique diminue ; et
- affichage de points d'intérêt (602, 603, 604) en tant que symboles graphiques (21, 22, 23, 24) dans la vue en perspective (600), dans lequel la taille de chaque symbole graphique dépend de la distance du point d'intérêt respectif (602, 603, 604) à partir du point de vue de la vue en perspective (600), de sorte que des symboles graphiques (23, 24) pour des points d'intérêt plus éloignés du point de vue soient affichés plus petits que des symboles graphiques (21, 22) pour des points d'intérêt plus proches du point de vue ;
dans lequel chaque point d'intérêt (602, 603, 604) est associé à une catégorie de point d'intérêt,
dans lequel à différentes catégories de point d'intérêt, sont attribuées différentes couleurs d'affichage, et dans lequel au moins certaines parties de symboles graphiques (23, 24) sont affichées dans la couleur d'affichage de la catégorie de point d'intérêt associée au point d'intérêt respectif (602, 603, 604),
**caractérisé en ce que** le procédé comprend les étapes de :
pour des points d'intérêt pour lesquels la mesure de distance est inférieure à une valeur prédéterminée, les symboles graphiques affichés pour les points d'intérêt sont des pictogrammes représentant un type de point d'intérêt ou la catégorie de point d'intérêt du point d'intérêt respectif, les pictogrammes étant affichés dans la couleur d'affichage attribuée à la catégorie de point d'intérêt associée au point d'intérêt respectif, et
pour des points d'intérêt pour lesquels la mesure de distance est supérieure à la valeur prédéterminée, les symboles graphiques affichés pour les points d'intérêt sont des formes géométriques entièrement remplies de la couleur d'affichage attribuée à la catégorie de point d'intérêt associée au point d'intérêt respectif.

2. Procédé selon l'une quelconque des revendications précédentes, dans lequel les points d'intérêt (602, 603, 604) peuvent être associés à au moins deux catégories de point d'intérêt chacune ayant une couleur d'affichage différente attribuée, dans lequel le symbole graphique affiché pour un tel point d'intérêt comprend les au moins deux couleurs d'affichage des au moins deux catégories de point d'intérêt associées.

3. Procédé selon la revendication 1, dans lequel la détermination de la taille du symbole graphique (21, 22, 23, 24) comprend la récupération du symbole graphique ayant la taille souhaitée à partir d'une base de données qui associe différentes valeurs de mesure de distance avec différentes tailles des symboles graphiques et qui associe en outre chaque catégorie de point d'intérêt à la couleur d'affichage respective du symbole graphique.

4. Procédé selon la revendication une des revendications précédentes, dans lequel la mesure de distance est une distance du point d'intérêt au point de vue, une distance du point d'intérêt à une partie saillante du point de vue sur la zone géographique, une distance d'une position actuelle déterminée par le dispositif de navigation ou sélectionnée par un utilisateur au point d'intérêt, ou une distance d'une position actuelle au point d'intérêt le long d'un ou plusieurs segments de route.

5. Dispositif de navigation, comprenant
- un dispositif d'affichage (14) pour afficher une vue en perspective (600) d'une zone géographique (601) ;
- une interface (15) vers une base de données (16) qui stocke des données géographiques et des points d'intérêt pour les données géographiques ; et
- une unité de traitement (11), l'unité de traitement (11) étant configurée pour mettre en oeuvre les étapes de
o affichage d'une vue en perspective (600) d'une zone géographique (601) sur le dispositif d'affichage (14) ;
o détermination pour chaque point d'intérêt (602, 603, 604) à afficher dans la vue en perspective (600) d'une mesure de distance représentant une distance du point d'intérêt (602, 603, 604) au point de vue de la vue en perspective (600) ;
o en fonction de la mesure de distance, détermination pour chacun des points d'intérêt (602, 603, 604) de la taille du symbole graphique (21, 22, 23, 24) à afficher pour le point d'intérêt respectif, dans lequel la taille du symbole graphique dépend de la mesure de distance de sorte que pour une mesure de distance supérieure, la taille du symbole géographique diminue ; et
o affichage des points d'intérêt (602, 603, 604) en tant que symboles graphiques (21, 22, 23, 24) dans la vue en perspective (600), dans lequel la taille de chaque symbole graphique dépend de la distance du point d'intérêt respectif à partir d'un point de vue de la vue en perspective, de sorte que des symboles graphiques (23, 24) pour des points d'intérêt plus éloignés du point de vue soient affichés plus petits que des symboles graphiques (21, 22) pour des points d'intérêt plus proches du point de vue,
dans lequel à différentes catégories de point d'intérêt, sont attribuées différentes couleurs d'affichage, et dans lequel au moins certaines parties de symboles graphiques (23, 24) sont affichées dans la couleur d'affichage de la catégorie de point d'intérêt associée au point d'intérêt respectif (602, 603, 604),
**caractérisé en ce que** le procédé comprend les étapes de :
pour des points d'intérêt pour lesquels la mesure de distance est inférieure à une valeur prédéterminée, les symboles graphiques affichés pour les points d'intérêt sont des pictogrammes représentant un type de point d'intérêt ou la catégorie de point d'intérêt du point d'intérêt respectif, les pictogrammes étant affichés dans la couleur d'affichage attribuée à la catégorie de point d'intérêt associée au point d'intérêt respectif, et
pour des points d'intérêt pour lesquels la mesure de distance est supérieure à la valeur prédéterminée, les symboles graphiques affichés pour les points d'intérêt sont des formes géométriques entièrement remplies de la couleur d'affichage attribuée à la catégorie de point d'intérêt associée au point d'intérêt respectif.

6. Dispositif de navigation selon la revendication 5, comprenant en outre une base de données (16) qui associe chaque point d'intérêt à la catégorie de point d'intérêt respectif et chaque catégorie de point d'intérêt à la couleur d'affichage attribuée.

7. Dispositif de navigation selon la revendication 6, dans lequel la base de données (16) associe en outre une mesure de distance représentant une distance entre un point de vue de la vue en perspective et un point d'intérêt à des tailles différentes du symbole graphique du point d'intérêt, de sorte que des valeurs supérieures de la mesure de distance soient associées à des tailles inférieurs du symbole graphique.

8. Dispositif de navigation selon l'une quelconque des revendications 5 à 7, dans lequel l'unité de traitement est configurée pour mettre en oeuvre le procédé selon l'une quelconque des revendications 2 à 7.

9. Produit de programme informatique qui peut être chargé dans une mémoire interne d'un dispositif informatique, le produit comprenant des parties de code logiciel pour mettre en oeuvre le procédé selon l'une quelconque des revendications 1 à 4, lorsque le produit est exécuté.

10. Support de données lisibles électroniquement qui stocke des informations de commande lisibles électroniquement configurées de sorte que lors de l'utilisation du support de données dans un dispositif informatique, les informations de commande mettent en oeuvre le procédé selon l'une quelconque des revendications 1 à 4.
